# EUROPEAN PATENT APPLICATION

(11) **EP 3 287 615 A1**
(43) Date of publication of application: **28.02.2018**
(21) Application number: 17185053.0
(22) Date of filing: 07.08.2017
(51) Int. Cl.: F01M 1/08, F01M 1/16

(54) **A METHOD OF REGULATING OIL PRESSURE WITHIN AN ENGINE ASSEMBLY**

(30) Priority: 24.08.2016 GB 201614465
(71) Applicant: Ford Global Technologies, LLC, Dearborn, MI 48126 (US)
(72) Inventor: DEMOTS, Anthony Bernard, Brentwood, Essex CM14 4RJ (GB)
(74) Representative: Haseltine Lake LLP

(57) **Abstract**

A method (300) of operating an engine assembly is provided. The engine assembly (1, 50) comprises an oil pump (104, 4) configured to provide oil to an oil system (100, 2) of the engine assembly (1, 50); a piston (16) cooling jet configured to direct a jet of oil from the oil system (100, 2) towards a piston (16) of the engine; and an electronic control valve (22) configured to control the flow of oil to the piston (16) cooling jet. The method (300) comprises operating the control valve (22) to provide a flow rate of oil above a threshold flow rate to the piston (16) cooling jet when the engine assembly (1, 50) is operating above a threshold power output or engine running speed; and regulating the pressure of oil within the oil system (100, 2) when the engine assembly (1, 50) is operating below the threshold power output or engine running speed, by operating the control valve (22).[

## Description

### Technical Field

The present disclosure relates to a method of regulating oil pressure within an engine assembly and is particularly, although not exclusively, concerned with a method of regulating oil pressure whilst reducing frictional losses within the engine assembly.

### Background

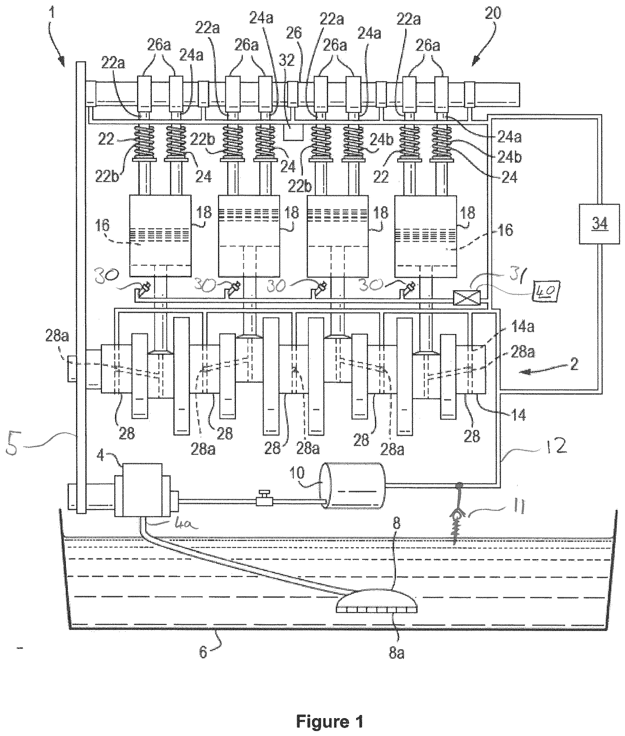

With reference to Figure 1, a previously proposed engine assembly 1 for a motor vehicle comprises an oil system 2, a crank shaft 14 and a plurality of pistons 16 configured to reciprocate within a plurality of cylinders 18. The engine assembly 1 further comprises a valve train 20 comprising a plurality of inlet and outlet valves 22, 24 and a cam shaft 26.

The inlet and outlet valves 22, 24 are configured to control the flow of inlet and exhaust gases into and out of the cylinders 18 respectively. The cam shaft 26 is configured to control the operation of the inlet and outlet valves 22, 24.

The oil system 2 comprises an oil pump 4 configured to draw oil from an oil sump 6 via an oil pick-up 8 to an inlet 4a of the oil pump. The oil pump may be driven by the engine. For example, as shown in Figure 1, the oil pump 4 may be driven by the crank shaft 14 via a drive belt 5. The oil pick up 8 may comprise a pick-up filter 8a configured to reduce the amount of particles or debris drawn from the oil sump 6 into the oil system 2.

The oil pump 4 may be configured to pump a flow of oil through the oil system 2. The oil pump 4 may be a fixed oil pump for which the pressure increase delivered by the pump for a given flow rate is primarily dependent on the rotational speed of a shaft of the pump. Accordingly, the oil flow rate and/or outlet oil pressure supplied by the fixed oil pump may depend on the running speed of the engine.

The oil system 2 may further comprise an oil filter 10. The oil filter may receive oil from the oil pump 4. The oil filter 10 may be configured to filter the oil to reduce the quantity of particles present in the oil being pumped through the oil system 2.

Oil that passes through the oil filter 10 may enter an oil reservoir in which the pressurised oil is stored prior to being delivered to oil consuming components of the engine assembly 1. The reservoir may be a tank or chamber (not shown) provided between the oil pump 4 or the oil filter 10 and an oil duct 12. Alternatively, as shown in Figure 1, no tank or chamber may be provided, and an initial portion of an oil duct 12 may form the oil reservoir. The oil duct 12 may be configured to deliver the oil to oil consuming components of the engine assembly 1.

The engine assembly 1 may comprise a plurality of journal bearings. The journal bearings may be configured to support portions 28 of the crank shaft 14 and may allow the crank shaft 14 to rotate relative to the engine assembly 1. Each of the journal bearings may comprise a journal bearing oil feed 28a. Oil may flow through the oil feeds 28a into each of the journal bearings and may lubricate the journal bearings to reduce friction between the portions 28 of the crank shaft 14 and the journal bearings.

The oil duct 12 may deliver oil from the oil system 2 to an oil channel 14a provided in the crank shaft 14. The oil channel 14a may be configured to allow oil to flow through the crank shaft 14 to the journal bearings oil feeds 28a.

It may be desirable to deliver sufficient oil through the oil feeds 28a, such that oil may coat substantially the full area of the journal bearings 28 that is in contact with the crank shaft 14. As the crank shaft 14 rotates, oil may be forced out of the journal bearings 28 and may drain through the engine assembly 1 to the oil sump 6. It may therefore be desirable for the oil system 2 to provide a flow, e.g. a continuous flow, of oil through the oil channel 14a to the journal bearing oil feeds 28a. The flow rate of oil consumed by the journal bearings 28 may vary according to the operating conditions of the engine assembly, e.g. the engine load, temperature and/or running speed.

As shown in Figure 1, the engine assembly 1 may further comprise a plurality of Piston Cooling Jets (PCJs) 30. Each of the piston cooling jets may be configured to direct a jet of oil onto a respective piston 16 of the engine assembly. Providing the jet of oil from the piston cooling jets 30 may cool and lubricate the pistons 16 and may improve the efficiency of the engine assembly 1. Use of the piston cooling jets 30 may be particularly beneficial when the engine is operating at a high running speed or under a high load.

The oil system 2 may comprise a PCJ valve 31 configured to control the flow of oil to the piston cooling jets 30. The PCJ valve 31 may be an electrically controlled valve, such as a solenoid valve, which is operable to open and close to selectively permit a flow of oil from the oil duct 12 to the PCJs 30. The electrically controlled PCJ valve may be coupled to a PCJ valve controller 40 or another controller of the vehicle, which may open and close the PCJ valve 31 when desired, e.g. according to the engine operating conditions.

As mentioned above, the engine assembly 1 may comprise a cam shaft 26 configured to control the operation of the inlet and outlet valves 22, 24. The cam shaft may comprise a plurality of cams 26a, that each act against a rocker (not shown) as the cam shaft 26 rotates. Each rocker may push against a valve stem 22a, 24a of a respective valve 22, 24 in order to open the valve and allow a flow of inlet or exhaust gases through the valve. The valves may each be provided with a spring 22b, 24b configured to return the valves to closed positions when not being pushed against by the rocker.

The cams 26a may be configured such that, at particular points in the rotation of the cam shaft 26, respective ones of the cams are arranged to allow a corresponding valve 22, 24 to be closed. The cams 26a may be configured such that when a valve 22, 24 is closed, a clearance gap is provided between the corresponding cam and rocker. This may allow the valve springs 22b, 24b to act to close the respective valves 22, 24 without the valve stems 22a, 24a interfering with the rockers or cams 26a.

During operation of the engine assembly 1, the temperature of components of the engine assembly may vary, which may vary the size of the clearance gap. A lash adjustor, such as a hydraulic lash adjustor (not shown) may be provided at each of the rockers. The lash adjustor may be configured to adjust the size of the clearance gap, in order to allow the corresponding valve to close. The hydraulic lash adjustors may require a supply of oil in order to operate, and hence, the oil system 2, may be configured to supply oil to the hydraulic lash adjustors. The hydraulic lash adjustors may require oil to be supplied at high pressure, e.g. a higher pressure than the journal bearings 28. The flow rate of oil consumed by the hydraulic lash adjustors may vary according to the need to adjust the clearance gap.

The engine assembly 1 may comprise further oil consuming components, for example, as depicted in Figure 1, the engine assembly 1 may comprise a variable valve timing system 32 configured to adjust the timings with which the inlet and/or outlet valves 22, 24 are opened and closed. Additionally or alternatively, the engine assembly 1 may comprise a turbocharger assembly 34, configured to increase the pressure of inlet air entering the cylinders 16 of the engine assembly 1 via the inlet valves 22. The turbocharger assembly 34 may receive one or more feeds of oil from the oil system 2, for example, the turbocharger may receive a high pressure oil feed and a low pressure oil feed. The flow rate of oil consumed by the turbocharger may depend on the operating conditions of the turbocharger assembly.

As mentioned above, each of the oil consuming components of the engine assembly 1 may have different requirements of pressure and flow rate of oil in order to operate most effectively. Furthermore, the flow rate of oil consumed by each of the oil consuming components may vary according to the current operating conditions of the engine, e.g. the engine running speed, power and/or heat output. For example, as described above, the oil system 2 may comprise a PCJ valve 31, which controls the flow of oil to the piston cooling jets 30. When the engine running speed, engine power and/or heat output is low, the PCJ valve may be closed and the PCJs may not consume any oil.

As described above, the oil pump 4 may be a fixed oil pump, although the pressure and/or flow rate of oil provided by the fixed oil pump may vary according to the operating conditions of the engine, the operation of the fixed oil pump may vary differently to the oil consuming components. Hence, in some engine operating conditions, the oil pump 4 may supply a higher flow rate of oil and/or a higher pressure of oil than necessary to meet the requirements of each of the oil consuming components.

When the flow rate of oil being provided by the oil pump 4 is greater than the desired flow rate of oil being consumed by the components of the engine assembly, the pressure of oil within the oil duct 12 may increase. In some cases this may be undesirable as it may disrupt the operation of the oil pump and/or one or more of the oil consuming components.

In order to prevent the pressure of oil within the oil duct 12 reaching undesirable levels, the oil system may further comprise a bleed valve 11. The bleed valve 11 may be connected between a position downstream of the oil pump 4 and drain into the oil sump 6. In the arrangement shown in Figure 1, the bleed valve is coupled to the oil duct 12 downstream of the oil filter 10, however, it is equally envisaged that the bleed valve 11 may be connected to the oil system 2 between the oil pump 4 and the oil filter 10. The bleed valve 11 may be configured such that, if the pressure of oil within the oil reservoir or the oil duct 12 exceeds a first threshold pressure value, the bleed valve 11 opens, allowing oil to return to the oil sump 6. The bleed valve 11 may thereby be configured to maintain the pressure of oil at or below a first threshold pressure value.

Providing the bleed valve 11 within the engine assembly 1 may prevent the oil within the oil duct 12 or oil reservoir reaching undesirable levels. However, as the oil pump 4 continues operating whilst the bleed valve 11 is open, power may be drawn from the engine without providing any benefit to the engine assembly 1. In other words, power generated by the engine may be wasted.

In order to reduce the amount of power being drawn from the engine, the fixed oil pump 4 may be replaced by a variable oil pump. The variable oil pump may be configured to allow the pressure and/or flow rate of oil being output by the oil pump to be selectively varied. The variable oil pump may be controlled by a controller of the vehicle according to an oil requirement of the engine assembly. Hence, when it is desirable for the components of the engine to consume a low flow rate of oil, the variable oil pump may be controlled to reduce the pressure and/or flow rate of oil being provided by the oil pump. Providing a variable oil pump may therefore reduce the amount of oil being bled by the bleed valve 11, which may reduce the power from the engine being wasted.

Variable oil pumps may be more expensive than fixed oil pumps due to their increased complexity. Additionally, when the oil system is provided with a variable oil pump, in may be necessary for other components of the oil system to be configured for use together with the variable oil pump. This may significantly increase the cost of the oil system.

### Statements of Invention

According to an aspect of the present disclosure, there is provided a method of regulating oil pressure within an engine assembly, the engine assembly comprising: an oil pump configured to provide oil to an oil system of the engine assembly; a piston cooling jet configured to direct a jet of oil from the oil system towards a piston of the engine; and an electronic control valve configured to control the flow of oil to the piston cooling jet, wherein the method comprises: operating the control valve to provide a flow rate of oil above a threshold flow rate to the piston cooling jet when the engine assembly is operating above a threshold power output or threshold engine running speed; and regulating, e.g. actively controlling, the pressure of oil within the oil system when the engine assembly is operating below the threshold power output or threshold engine running speed, by operating the control valve.

The control valve may be operated to provide a flow rate of oil below the threshold flow rate to the piston cooling jet when the pressure of oil within the oil system is being regulated.

The oil pump may be a fixed oil pump, e.g. a fixed geometry oil pump, configured such that the pressure of oil provided by the oil pump varies according to the engine running speed.

The control valve may be a variable control valve configured to allow the flow rate of oil to the piston cooling jet to be selectively varied.

The method may comprise determining the pressure of oil within the oil system, e.g. to be supplied from the oil system to the components of the engine assembly. The method may comprise controlling the operation of the control valve such that the pressure of oil within the oil system is maintained at or below a first threshold pressure level, e.g. when the engine assembly is operating below the threshold power output or engine running speed. Additionally or alternatively, the method may comprise controlling the operation of the control valve such that the pressure of oil within the oil system is not reduced below a second threshold pressure level.

The method may further comprise controlling the operation of the control valve to maintain the pressure of oil within the oil system at a particular value. The particular value may be fixed or varied, e.g. by a controller.

According to another aspect of the present disclosure, there is provided a method of operating an engine assembly, the engine assembly comprising: an oil pump configured to provide oil to an oil system; a piston cooling jet, configured to direct a jet of oil from the oil system towards a piston of the engine; and an electronic control valve configured to control the flow of oil to the piston cooling jet, wherein the method comprises: operating the control valve to provide a flow rate of oil above a threshold flow rate to the piston cooling jet when the engine assembly is operating above a threshold power output or running speed; and operating the control valve to provide a flow of oil to the piston cooling jet when the engine assembly is operating at or below the threshold power output or running speed, e.g. at a flow rate less than or equal to the threshold flow rate.

When the engine assembly is operating at or below the threshold power output or running speed, operating the control valve may be performed to regulate, e.g. actively control, the pressure of oil within the oil system.

According to another aspect of the present disclosure, there is provided an engine assembly comprising: an oil pump configured to provide oil to an oil system; a piston cooling jet, configured to direct a jet of oil from the oil system towards a piston of the engine; an electronic control valve configured to control the flow of oil to the piston cooling jet; and a controller configured to: operate the control valve to provide a flow rate of oil above a threshold flow rate to the piston cooling jet when the engine assembly is operating above a threshold power output or threshold engine running speed; and regulate the pressure of oil within the oil system when the engine assembly is operating below the threshold power output or threshold engine running speed, by operating the control valve.

The control valve may be operated to provide a flow rate of oil below the threshold flow rate to the piston cooling jet when the pressure of oil is being regulated.

The oil pump may be a fixed oil pump configured such that the pressure of oil provided by the pump varies according to a running speed of the engine assembly.

The control valve may be a variable flow control valve operable to control the flow rate of oil passing through the control valve.

The engine assembly may further comprise a pressure sensor configured to determine the pressure of oil within the oil system, e.g. to be supplied from the oil system to the components of the engine assembly.

The controller may be configured to control the operation of the control valve in order to maintain the pressure of oil within the oil system at or below a first threshold pressure level. Additionally or alternatively, the controller may be configured to control the operation of the control valve in order to maintain the pressure of oil within the oil system at or above a second threshold pressure level.

A vehicle, such as a motor vehicle, may comprise the above-mentioned engine assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in the drawings:
Figure 1 is a schematic view of a previously proposed engine assembly;
Figure 2 is a schematic view of an oil system for the engine assembly according to the present disclosure; and
Figure 3 shows a method of operating an engine assembly according to arrangements of the present disclosure.

### Detailed Description

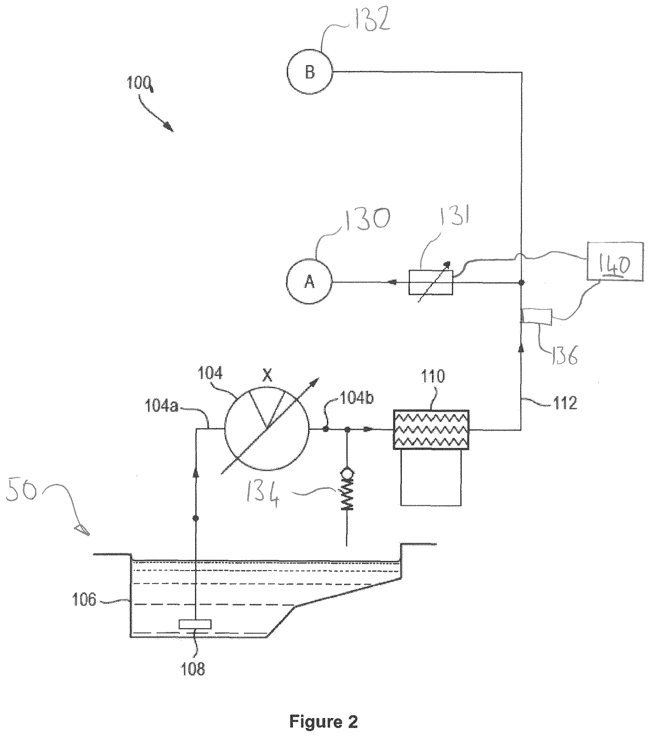

With reference to Figure 2, in order to improve the efficiency of an engine assembly 50, without significantly increasing the cost of the engine assembly, the engine assembly 50 may be provided with an oil system 100 according to arrangements of the present disclosure.

Oil may be drawn from an oil sump 106 of the engine assembly 50 via an oil pick up 108 into an inlet 104a of the oil pump 104. Oil pumped by the oil pump 104 may be output from an outlet 104b of the oil pump to an oil reservoir in which the pressurised oil is stored prior to being delivered to oil consuming components of the engine assembly 1. The reservoir may be a tank or chamber (not shown) provided between the oil pump 104 and the oil duct 112. Alternatively, as shown in Figure 2, the oil duct 112 may form the oil reservoir, e.g. there may be no tank or chamber. The oil system 100 may further comprise an oil filter 110. The oil filter 110 may be similar to the oil filter 10 described above with reference to Figure 1.

The engine assembly 50 comprises one or more piston cooling jets 130 configured to direct a jet of oil onto a respective piston of the engine assembly in the same way as the piston cooling jets 30 described above with reference to Figure 1. A PCJ valve 131 of the oil system 100 selectively controls the flow of oil to the piston cooling jets 130.

The engine assembly 50 may further comprise one or more further oil consuming components 132, such as journal bearings, a hydraulic lash adjustor, a turbocharger and/or any other component of the engine assembly 50.

In the arrangement depicted in Figure 2, the first oil pump 104 is a fixed pressure oil pump configured to supply oil at a pressure and/or flow rate, which varies according to the speed of a shaft of the pump (which may be linked to engine running speed) and is not otherwise adjustable during use. In other words, the pressure increase delivered by the oil pump 104 at a particular flow rate of oil is primarily dependent on the rotational speed of the shaft of the pump and the pressure increase may not otherwise be actively controlled. As such, the pump may be a fixed geometry pump. As described above, at certain operating conditions of the engine assembly 50, the flow rate of oil being consumed by PCJs 130 and the further oil consuming components 132 may be less than the flow rate of oil being supplied by the oil pump 104. In this case, the pressure of oil within the oil reservoir and/or oil duct 112 may increase.

In the arrangement described with reference to Figure 1, the PCJ valve 31 is a solenoid valve configured to be either fully open or fully closed according to control signals from the PCJ valve controller 40. When the solenoid valve is opened, the flow rate of oil being supplied to the PCJs 30 may vary according to the pressure of oil within the oil reservoir. When the controller determines that cooling of the pistons is not required, it may be undesirable to open the PCJ valve 31 to supply oil to the PCJs 30. For example, opening the PCJ valve 31 to allow oil to flow through the PCJs 30 may undesirably reduce the pressure of oil within the oil reservoir, which may be detrimental to the performance of the other oil consuming components of the engine assembly.

By contrast, in the arrangement shown in Figure 2, the PCJ valve 131 is a variable valve, which may vary the degree to which the valve is opened and as such allows the flow rate and/or pressure of oil being supplied to the PCJs 130 to be selectively varied. The PCJ valve 130 may be controlled by a PCJ controller 140.

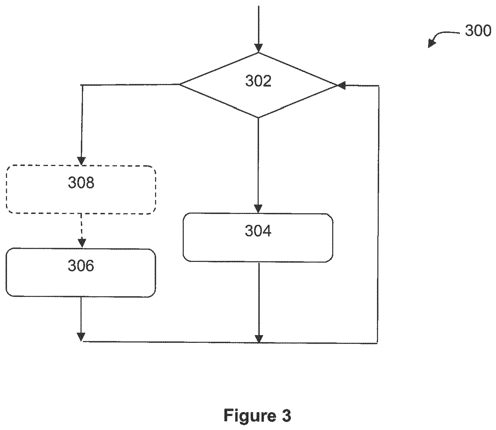

With reference to Figure 3, PCJ controller 140 may control the operation of the PCJ valve 131 to supply oil to the PCJs 130 according to a method 300.

The method 300 may begin at a first step 302, in which it is determined whether the engine running speed and/or power output is above a threshold, e.g. whether piston cooling by the PCJs is needed. If the engine running speed and/or power output is above the threshold, the method 300 proceeds to a second step 304, in which the PCJ valve 131 is opened, e.g. fully opened, in order to supply a flow rate of oil to the PCJs 130. The oil may be ejected from the PCJs 130 at a flow rate that is above a threshold rate.

If the engine running speed and/or power output was found not to be above the threshold in the first step 302, e.g. if piston cooling may not be needed, the method 300, may proceed to a third step 306, in which the PCJ valve 131 is operated to supply oil to the PCJs to regulate the pressure of oil. For example, oil may be supplied to the PCJs at flow rate less than or equal to the threshold rate, e.g. by partially opening the PCJ valve 131.

Supplying at least a low flow rate of oil to the piston cooling jets 130 may be beneficial at most, e.g. substantially all, engine running conditions. The oil supplied may lubricate the movement of the pistons within their respective cylinders, which may reduce frictional losses within the engine assembly 50.

The PCJ controller 140 may be configured to control the flow rate of oil to the piston cooling jets 130, e.g. by varying the degree to which the PCJ valve is opened, to regulate the pressure of oil within the oil system such that the pressure of oil within the oil reservoir does not increase above the first threshold pressure value. As supplying a low flow rate of oil to the piston cooling jets reduces frictional losses in the engine, regulating oil pressure in this way may be advantageous compared to bleeding oil back to the oil sump 106, for example using the bleed valve 11 shown in Figure 1.

When the variable PCJ valve 131 is provided within the oil system 100 and configured to regulate the pressure of the oil system as described above, it may not be necessary to provide a bleed valve within the oil system 100. In other words, the oil system may be bled exclusively via the piston cooling jets 130. However, in some cases in may not be desirable to rely exclusively on the piston cooling jets. In this case, as shown in Figure 2, the oil system 100 may comprise a bleed valve 134

In the arrangement shown in Figure 2, the bleed valve 134 is connected downstream of the oil pump 104 at a position between the oil pump and the oil filter 110. However, it is equally envisaged that the bleed valve 134 may be connected downstream of the oil filter 110. For example, the bleed valve may be connected to the oil reservoir or the oil duct 112.

As mentioned above, providing the low flow rate and/or pressure of oil to the piston cooling jets 130 may beneficially reduce frictional losses within the engine. Hence, it may be desirable to provide the low flow rate and/or pressure of oil to the PCJs 130 whenever the engine is operating at or below the threshold power output and/or running speed. However, it may be undesirable for the pressure of oil within the oil reservoir or oil duct 112, to be reduced below a second threshold pressure. Hence, when the pressure of oil within the oil reservoir is at or below the second threshold pressure, the PCJ valve 131 may be controlled to prevent a flow of oil to the PCJs 130.

The engine assembly 50 may comprise a pressure sensor 136 configured to determine the pressure of oil within the oil system. An oil pressure reading may be provided to the PCJ controller 140, which may control the operation of the PCJ valve 131 appropriately, e.g. in order to maintain the pressure within the oil system, e.g. within the oil reservoir, at or above the second threshold pressure. The method 300 may comprise an optional step 308, in which the pressure of oil within the system is determined and the opening position of the PCJ valve is adjusted accordingly. For example, the operation of the PCJ valve 131 may be adjusted to maintain the pressure of oil within the oil system at or close to a predetermined pressure. The optional step 308 may be performed as part of the third step 306. Alternatively, the optional step may be performed before and/or after the third step 306.

The oil system 100 described above may be provided within the engine assembly 1 depicted in Figure 1, e.g. the oil system 100 may be provided in place of the oil system 2. It is also envisaged that the oil system 100 may be provided within any other engine assembly.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method of regulating oil pressure within an engine assembly, the engine assembly comprising:
an oil pump configured to provide oil to an oil system of the engine assembly;
a piston cooling jet configured to direct a jet of oil from the oil system towards a piston of the engine; and
an electronic control valve configured to control the flow of oil to the piston cooling jet, wherein the method comprises:
operating the control valve to provide a flow rate of oil above a threshold flow rate to the piston cooling jet when the engine assembly is operating above a threshold power output or threshold engine running speed; and
operating the control valve to supply a flow of oil to the piston cooling jet and regulate the pressure of oil within the oil system when the engine assembly is operating below the threshold power output or threshold engine running speed.

2. The method of claim 1, wherein the control valve is operated to provide a flow rate of oil below the threshold flow rate to the piston cooling jet when the pressure of oil within the oil system is being regulated.

3. The method of claim 1 or 2, wherein the oil pump is a fixed oil pump configured such that the pressure of oil provided by the oil pump varies according to the engine running speed.

4. The method of any of the preceding claims, wherein the control valve is a variable control valve configured to allow the flow rate of oil to the piston cooling jet to be selectively varied.

5. The method of any of the preceding claims, wherein the method comprises:
determining the pressure of oil within the oil system.

6. The method of any of the preceding claims, wherein the method further comprises:
controlling the operation of the control valve such that the pressure of oil within the oil system is maintained at or below a first threshold pressure level.

7. The method of any of the preceding claims, wherein the method further comprises:
controlling the operation of the control valve such that the pressure of oil within the oil system is not reduced below a second threshold pressure level.

8. The method of any of the preceding claims, wherein the method further comprises:
controlling the operation of the control valve to maintain the pressure of oil within the oil system at a particular value.

9. An engine assembly comprising:
an oil pump configured to provide oil to an oil system;
a piston cooling jet, configured to direct a jet of oil from the oil system towards a piston of the engine;
an electronic control valve configured to control the flow of oil to the piston cooling jet; and
a controller configured to:
operate the control valve to provide a flow rate of oil above a threshold flow rate to the piston cooling jet when the engine assembly is operating above a threshold power output or threshold engine running speed; and
operate the control valve to supply a flow of oil to the piston cooling jet and regulate the pressure of oil within the oil system when the engine assembly is operating below the threshold power output or threshold engine running speed.

10. The engine assembly according to claim 9, wherein the oil pump is a fixed oil pump configured such that the pressure of oil provided by the pump varies according to a running speed of the engine assembly.

11. The engine assembly according to claim 9 or 10, wherein the control valve is a variable flow control valve operable to control the flow rate of oil passing through the control valve.

12. The engine assembly according to any of claims 9 to 11 wherein the engine assembly further comprises a pressure sensor configured to determine the pressure of oil within the oil system.

13. The engine assembly according to any of claims 9 to 12, wherein the controller is configured to control the operation of the control valve in order to maintain the pressure of oil within the oil system at or below a first threshold pressure level.

14. The engine assembly according to any of claims 9 to 13, wherein the controller is configured to control the operation of the control valve in order to maintain the pressure of oil within the oil system is maintained at or above a second threshold pressure level.

15. A vehicle comprising the engine assembly of any of claims 9 to 14.
